# EUROPEAN PATENT SPECIFICATION

(11) **EP 3 406 650 B1**
(45) Date of publication and mention of the grant of the patent: **07.07.2021**
(21) Application number: 17862544.8
(22) Date of filing: 12.10.2017
(51) Int. Cl.: C08G 64/18, C08G 77/448, C08L 69/00, C08G 64/22, C08G 64/04, C08G 77/398

(54) **COPOLYCARBONATE AND RESIN COMPOSITION COMPRISING SAME**
COPOLYCARBONAT UND HARZZUSAMMENSETZUNG DAMIT
COPOLYCARBONATE ET COMPOSITION DE RÉSINE LE COMPRENANT

(30) Priority: 20.10.2016 KR 20160136730
(43) Date of publication of application: 28.11.2018
(73) Proprietor: LG Chem, Ltd., Seoul 07336 (KR)
(72) Inventor: LEE, Ki Jae, Daejeon 34122 (KR); PARK, Jung Jun, Daejeon 34122 (KR); HONG, Moo Ho, Daejeon 34122 (KR); BAHN, Hyong Min, Daejeon 34122 (KR); HWANG, Young Young, Daejeon 34122 (KR)
(74) Representative: Goddar, Heinz J.
(86) International application number: PCT/KR2017/011255
(87) International publication number: WO 2018/074777

(56) References cited:
- EP-A1- 3 064 523
- JP-A- 2003 064 169
- KR-A- 20010 066 179
- KR-A- 20130 116 667
- KR-A- 20140 116 921
- KR-A- 20160 067 748
- US-A1- 2014 371 360
- US-B2- 6 753 404

## Description

### BACKGROUND OF THE INVENTION

### (a) Field of the Invention

### Cross-reference to Related Application

This application claims the benefit of Korean Patent Application No. 10-2016-0136730 filed on October 20, 2016 with the Korean Intellectual Property Office.

The present disclosure relates to a copolycarbonate having improved flowability while maintaining excellent impact strength at room temperature and low temperature, and a composition including the same.

### (b) Description of the Related Art

Polycarbonate resins are prepared by condensation-polymerization of an aromatic diol such as bisphenol A with a carbonate precursor such as phosgene, and have excellent impact strength, dimensional stability, heat resistance and transparency. Thus, the polycarbonate resins have application in a wide range of uses, such as exterior materials of electrical and electronic products, automobile parts, building materials, and optical components.

Recently, in order to apply these polycarbonate resins to more various fields, many studies have been made to obtain desired physical properties by copolymerizing two or more aromatic diol compounds having different structures from each other and introducing units having different structures in a main chain of the polycarbonate.

Especially, studies for introducing a polysiloxane structure in a main chain of the polycarbonate have been undergone, but most of these technologies have disadvantages in that production costs are high, and flowability is deteriorated when impact strength or chemical resistance, particularly impact strength at low temperature is increased.

Therefore, the present inventors have studied copolycarbonate resins having improved flowability while maintaining excellent impact strength at room temperature and low temperature by solving the above disadvantages, and have found that a copolycarbonate in which a specific polysiloxane structure and a sebacoyl structure are introduced into the main chain of the polycarbonate as described below satisfies the above conditions, thereby completing the present invention.

EP 3 064 523 A1 discloses a copolycarbonate and a composition comprising the same, wherein the copolycarbonate has a structure in which a specific siloxane compound is introduced in a main chain of the polycarbonate.

US 6,753,404 B2 discloses a continuous process for the preparation of copolycarbonate resins, wherein the process is a polycondensation process in which a comonomer is incorporated into a polymer backbone.

US 2014/371,360 A1 discloses a flame retardant composition comprising a polycarbonate, a polysiloxane-polycarbonate copolymer, a branched polycarbonate, a reinforced filler, and a flame retardant.

### SUMMARY OF THE INVENTION

It is an object of the present disclosure to provide a copolycarbonate having improved flowability while maintaining excellent impact strength at room temperature and low temperature.

It is another object of the present disclosure to provide a composition including the copolycarbonate.

In order to achieve the above objects, the present disclosure provides a copolycarbonate including a repeating unit represented by Chemical Formula 1, a repeating unit represented by Chemical Formula 2, a repeating unit represented by Chemical Formula 3, and a repeating unit represented by Chemical Formula 4: 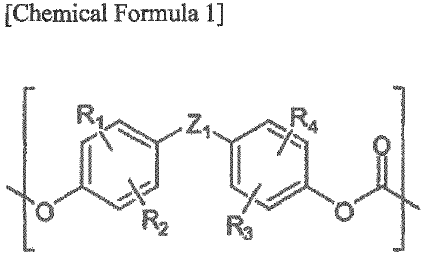 in Chemical Formula 1,
R₁ to R₄ are each independently hydrogen, C₁₋₁₀ alkyl, C₁₋₁₀ alkoxy, or halogen, and
Z₁ is C₁₋₁₀ alkylene unsubstituted or substituted with phenyl, C₃₋₁₅ cycloalkylene unsubstituted or substituted with C₁₋₁₀ alkyl, O, S, SO, SO₂, or CO, 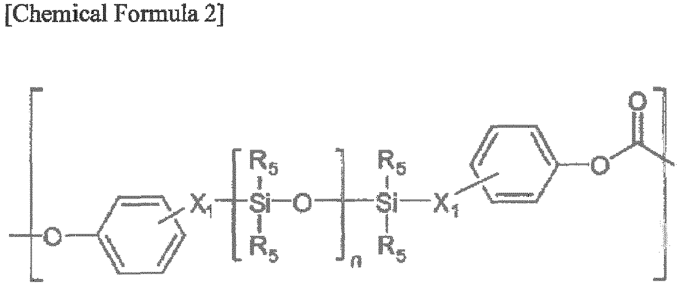
in Chemical Formula 2,
each of X₁ is independently C₁₋₁₀ alkylene,
each of R₅ is independently hydrogen; C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
n is an integer of 10 to 200, 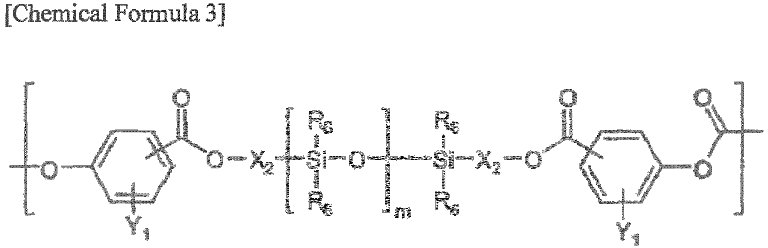
in Chemical Formula 3,
each of X₂ is independently C₁₋₁₀ alkylene,
each of Y₁ is independently hydrogen, C₁₋₆ alkyl, halogen, hydroxy, C₁₋₆ alkoxy or C₆₋₂₀ aryl,
each of R₆ is independently hydrogen; C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
m is an integer of 10 to 200, 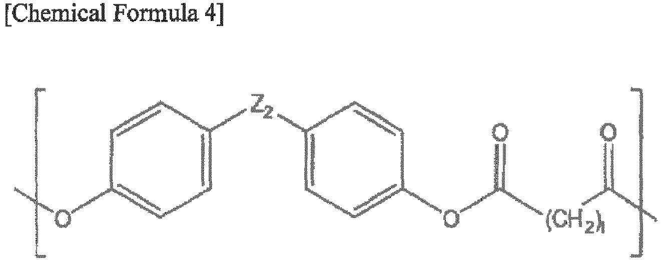
in Chemical Formula 4,
Z₂ is C₁₋₁₀ alkylene unsubstituted or substituted with phenyl, C₃₋₁₅ cycloalkylene unsubstituted or substituted with C₁₋₁₀ alkyl, O, S, SO, SO₂, or CO, and
1 is an integer of 1 to 10.

The polycarbonate resin is prepared by condensation-polymerization of an aromatic diol such as bisphenol A with a carbonate precursor such as phosgene, and it itself has excellent mechanical properties, but it is necessary to satisfy various physical properties at the same time depending on the application field. Particularly, the polycarbonate resin may improve specific physical properties by changing the structure of the polycarbonate resin. However, in most cases, when one of the physical properties is improved, the other properties are deteriorated.

Accordingly, the present disclosure introduced the repeating units of the Chemical Formulae 2, 3, and 4 in addition to the conventional polycarbonate structure containing the repeating unit of the Chemical Formula 1 to improve flowability while maintaining excellent impact strength at room temperature and low temperature. By introducing the repeating units of the Chemical Formulae 2 to 4, various physical properties of the polycarbonate can be improved without deteriorating other physical properties.

Hereinafter, a copolycarbonate and a composition including the same according to specific embodiments of the present disclosure will be described in more detail.

### Repeating unit of Chemical Formula 1

The repeating unit represented by Chemical Formula 1 forms a basic structure of the copolycarbonate resin according to the present disclosure, and is formed by reacting an aromatic diol compound and a carbonate precursor.

In Chemical Formula 1, preferably, R₁ to R₄ are each independently hydrogen, methyl, chloro, or bromo.

Further, Z₁ is preferably a linear or branched C₁₋₁₀ alkylene unsubstituted or substituted with phenyl, and more preferably methylene, ethane-1,1-diyl, propane-2,2-diyl, butane-2,2-diyl, 1-phenylethane-1,1-diyl, or diphenylmethylene. Further, preferably, Z₁ is cyclohexane-1,1-diyl, O, S, SO, SO₂, or CO.

Preferably, the repeating unit represented by Chemical Formula 1 may be derived from one or more aromatic diol compounds selected from the group consisting of bis(4-hydroxyphe-nyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, bisphenol A, 2,2-bis(4-hydroxyphenyl)butane, 1,1-bis(4-hydroxyphenyl)cyclohexane, 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3 -chlorophenyl)propane, 2,2-bis(4-hydroxy-3 -methylphenyl)propane, 2,2-bis(4-hydroxy-3,5-dirnethylphenyl)propane, 1,1-bis(4-hydroxyphenyl)-1-phenylethane, bis(4-hydroxyphenyl)diphenylmethane, and α,ω-bis[3 -(o-hydroxyphenyl)propyl]polydimethylsiloxane.

As used herein, 'derived from aromatic diol compounds' means that a hydroxy group of the aromatic diol compound and a carbonate precursor are reacted to form the repeating unit represented by Chemical Formula 1.

For example, when bisphenol A, which is an aromatic diol compound, and triphosgene, which is a carbonate precursor, are polymerized, the repeating unit represented by Chemical Formula 1 is represented by the following Chemical Formula 1-1:

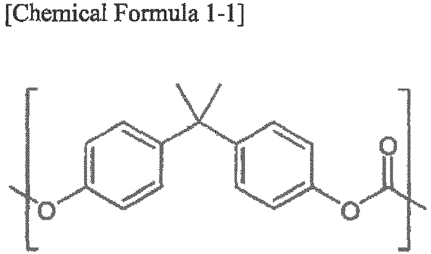

The carbonate precursor used herein may include one or more selected from the group consisting of dimethyl carbonate, diethyl carbonate, dibutyl carbonate, dicyclohexyl carbonate, diphenyl carbonate, ditolyl carbonate, bis(chlorophenyl)carbonate, di-m-cresyl carbonate, dinaphthyl carbonate, bis(diphenyl)carbonate, phosgene, triphosgene, diphosgene, bromophosgene and bishaloformate. Preferably, triphosgene or phosgene may be used.

### Repeating unit of Chemical Formula 2 and repeating unit of Chemical Formula 3

The repeating units represented by Chemical Formulae 2 and 3 have a polyorganosiloxane structure, and may be introduced into copolycarbonate to improve various physical properties.

In Chemical Formula 2, each of X₁ is independently preferably C₂₋₁₀ alkylene, more preferably C₂₋₄ alkylene, and most preferably propane-1,3-diyl.

Also, preferably, each of R₅ is independently hydrogen, methyl, ethyl, propyl, 3-phenylpropyl, 2-phenylpropyl, 3-(oxiranylmethoxy)propyl, fluoro, chloro, bromo, iodo, methoxy, ethoxy, propoxy, allyl, 2,2,2-trifluoroethyl, 3,3,3-trifluoropropyl, phenyl, or naphthyl. In addition, each of R₅ is independently preferably C₁₋₁₀ alkyl, more preferably C₁₋₆ alkyl, more preferably C₁₋₃ alkyl, and most preferably methyl.

Preferably, n is an integer of 10 or more, 15 or more, 20 or more, 25 or more, 30 or more, 31 or more, or 32 or more, and 50 or less, 45 or less, 40 or less, 39 or less, 38 or less, or 37 or less.

In Chemical Formula 3, each of X₂ is independently preferably C₂₋₁₀ alkylene, more preferably C₂₋₆ alkylene, and most preferably isobutylene.

Further, preferably, Y₁ is hydrogen.

Further, preferably, each of R₆ is independently hydrogen, methyl, ethyl, propyl, 3-phenylpropyl, 2-phenylpropyl, 3-(oxiranylmethoxy)propyl, fluoro, chloro, bromo, iodo, methoxy, ethoxy, propoxy, allyl, 2,2,2-trifluoroethyl, 3,3,3-trifluoropropyl, phenyl, or naphthyl. Further, preferably, each of R₆ is independently C₁₋₁₀ alkyl, more preferably C₁₋₆ alkyl, more preferably C₁₋₃ alkyl, and most preferably methyl.

Preferably, m is an integer of 30 or more, 35 or more, 40 or more, 45 or more, 46 or more, 47 or more, or 48 or more, and 70 or less, 65 or less, 60 or less, 55 or less, 54 or less, 53 or less, or 52 or less.

The repeating unit represented by Chemical Formula 2 and the repeating unit represented by Chemical Formula 3 are, respectively, derived from a siloxane compound represented by the following Chemical Formula 2-1 and a siloxane compound represented by the following Chemical Formula 3-1: 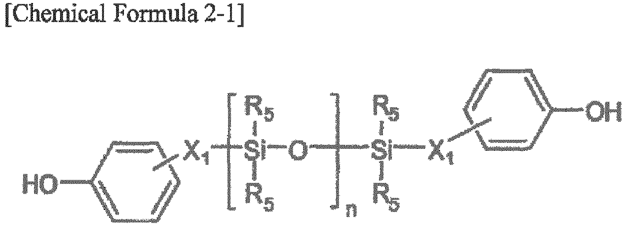 in Chemical Formula 2-1,
X₁, R₅ and n are the same as previously defined. 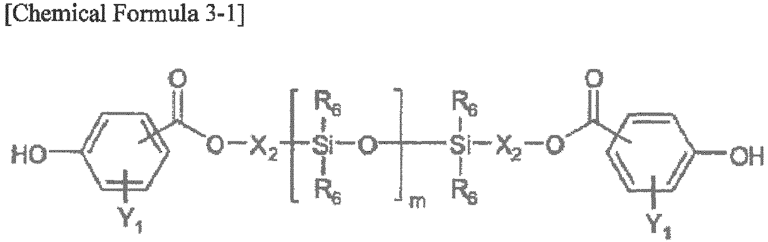 in Chemical Formula 3-1,
X₂, Y₁, R₆ and m are the same as previously defined.

As used herein, 'derived from a siloxane compound' means that a hydroxy group of the respective siloxane compound and a carbonate precursor are reacted to form the repeating unit represented by Chemical Formula 2 and the repeating unit represented by Chemical Formula 3. Further, the carbonate precursors that can be used for the formation of the repeating units represented by Chemical Formulae 2 and 3 are the same as those described for the carbonate precursor that can be used for the formation of the repeating unit represented by Chemical Formula 1 described above.

Preferably, the repeating unit represented by Chemical Formula 2 is represented by the following Chemical Formula 2-2: 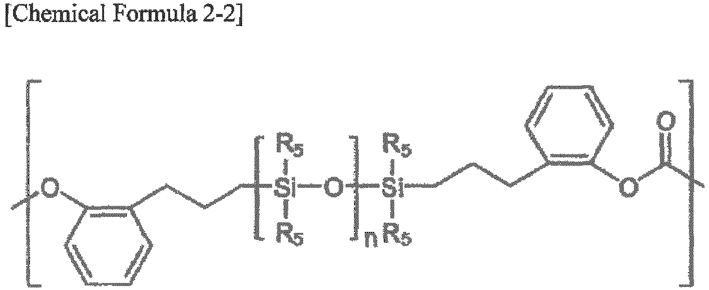 in Chemical Formula 2-2, R₅ and n are the same as previously defined. Preferably, R₅ is methyl.

Preferably, the repeating unit represented by Chemical Formula 3 is represented by the following Chemical Formula 3-2: 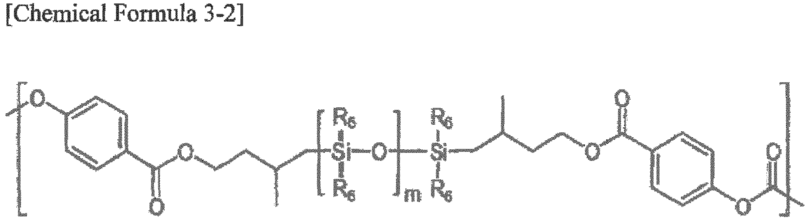 in Chemical Formula 3-2, R₆ and m are the same as previously defined. Preferably, R₆ is methyl.

### Repeating Unit of Chemical Formula 4

The repeating unit represented by Chemical Formula 4 has a sebacoyl structure, and may be introduced into copolycarbonate to improve flowability.

In Chemical Formula 4, Z₂ is preferably a linear or branched C₁₋₁₀ alkylene unsubstituted or substituted with phenyl, and more preferably methylene, ethane-1,1-diyl, propane-2,2-diyl, butane-2,2-diyl, 1-phenylethane-1,1-diyl, or diphenylmethylene. Further, preferably, Z₂ is cyclohexane-1,1 -diyl, O, S, SO, SO₂, or CO.

Preferably, the repeating unit represented by Chemical Formula 4 is represented by the following Chemical Formula 4-1:

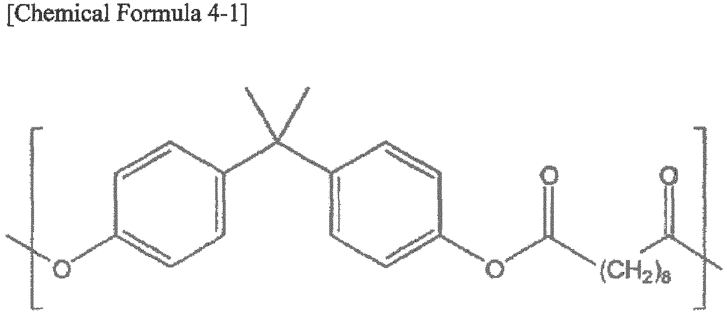

Further, the repeating unit represented by Chemical Formula 4 is formed by reacting a composition including a compound represented by the following Chemical Formula 4-2, an aromatic diol compound, and a carbonate precursor: 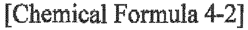 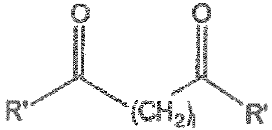 in Chemical Formula 4-2,
R is hydrogen, OH, C₁₋₁₀ alkyl, or halogen, and 1 is the same as previously defined.

Further, the aromatic diol compound and the carbonate precursor are the same as those described for the aromatic diol compound and the carbonate precursor that can be used for the formation of the repeating unit represented by Chemical Formula 1 described above.

### Copolycarbonate

The copolycarbonate according to the present disclosure includes the repeating unit represented by Chemical Formula 1, the repeating unit represented by Chemical Formula 2, the repeating unit represented by Chemical Formula 3, and the repeating unit represented by Chemical Formula 4. Preferably, the copolycarbonate is a random copolymer.

In addition, various properties of the copolycarbonate may be improved simultaneously by controlling the content of each repeating unit. The weight ratio between the repeating unit represented by Chemical Formula 2 and the repeating unit represented by Chemical Formula 3 having the polyorganosiloxane structure may be 1:99 to 99:1. Preferably, the weight ratio is 3:97 to 97:3, and more preferably 5:95 to 95:5. The weight ratio of the above repeating units corresponds to the weight ratio of siloxane compounds, for example, the siloxane compound represented by Chemical Formula 2-1 and the siloxane compound represented by Chemical Formula 3-1.

In addition, the weight ratio between the repeating unit represented by Chemical Formula 1, and the repeating units represented by Chemical Formulae 2 and 3 (Chemical Formula 1: (Chemical Formulae 2 and 3)) may be 1:0.001 to 1:0.2, and more preferably 1:0.01 to 1:0.1. The weight ratio of the above repeating units corresponds to the weight ratio of the aromatic diol compound which is used to form the repeating unit represented by Chemical Formula 1, and siloxane compounds which are used to form the repeating units represented by Chemical Formulae 2 and 3.

In addition, the weight ratio between the repeating unit represented by Chemical Formula 1 and the repeating unit represented by Chemical Formula 4 may be 1:99 to 99:1. Preferably, the weight ratio is 2:98 to 98:2, and more preferably 3:97 to 97:3. The weight ratio of the above repeating units corresponds to the weight ratio of the aromatic diol compound and the compound represented by Chemical Formula 4-2.

The copolycarbonate according to the present disclosure may be prepared by the method including the step of polymerizing the aromatic diol compound, the carbonate precursor, two kinds of siloxane compounds represented by Chemical Formulae 2-1 and 3-1, and the compound represented by Chemical Formula 4-2.

The aromatic diol compound, the carbonate precursor, and the siloxane compounds are the same as previously described.

In addition, the polymerization is preferably carried out by an interfacial polymerization method. In this case, there is an advantage in that the polymerization reaction can be made at atmospheric pressure and low temperature, and it is easy to control the molecular weight.

The reaction temperature is preferably from 0 °C to 40 °C, and the reaction time is preferably from 10 minutes to 5 hours. In addition, pH is preferably maintained at 9 or more, or 11 or more during the reaction.

The solvent which can be used in the polymerization is not particularly limited as long as it is a solvent that can be usually used in the polymerization of polycarbonate. For example, halogenated hydrocarbon such as methylene chloride or chlorobenzene may be used.

Further, the polymerization is preferably conducted in the presence of an acid binding agent, and the acid binding agent may be alkali metal hydroxides such as sodium hydroxide or potassium hydroxide, or amine compounds such as pyridine.

In addition, the polymerization may be conducted in the presence of a molecular weight modifier to control the molecular weight of the copolycarbonate. As the above molecular weight modifier, C₁₋₂₀ alkylphenol may be used, and specifically, p-tert-butylphenol, p-cumyl phenol, decyl phenol, dodecyl phenol, tetradecyl phenol, hexadecyl phenol, octadecyl phenol, eicosyl phenol, docosyl phenol or triacontyl phenol may be used. The molecular weight modifier may be added before the initiation of polymerization, during the initiation of polymerization, or after the initiation of polymerization. The molecular weight modifier is contained, for example, in an amount of 0.01 parts by weight or more, 0.1 parts by weight or more, or 1 parts by weight or more, and 10 parts by weight or less, 6 parts by weight or less, or 5 parts by weight or less, preferably 0.1 to 6 parts by weight, based on 100 parts by weight of the aromatic diol compound. Within this range, the required molecular weight can be obtained.

In addition, a reaction accelerator, for example, a tertiary amine compound such as triethylamine, tetra-n-butyl ammonium bromide, and tetra-n-butylphosphonium bromide, a quaternary ammonium compound, or a quaternary phosphonium compound may be further used for accelerating the polymerization reaction.

In addition, the copolycarbonate has a weight average molecular weight (g/mol) of 1,000 to 100,000, preferably 30,000 to 70,000, and more preferably 40,000 to 60,000.

Preferably, the copolycarbonate according to the present disclosure has impact strength at room temperature of 800 to 1100 J/m, measured at 23 °C in accordance with ASTM D256 (1/8 inch, Notched Izod). More preferably, the impact strength at room temperature (J/m) is 820 or more, or 850 or more. In addition, there is no specific upper limit, because the higher impact strength at room temperature can be evaluated as the better. However, for example, the upper limit may be 1050 or less, or 1000 or less.

Preferably, the copolycarbonate according to the present disclosure has impact strength at low temperature of 550 to 1000 J/m, measured at -30 °C in accordance with ASTM D256 (1/8 inch, Notched Izod). More preferably, the impact strength at low temperature (J/m) is 560 or more, or 570 or more. In addition, there is no specific upper limit, because the higher impact strength at low temperature can be evaluated as the better. However, for example, the upper limit may be 950 or less, or 900 or less.

Preferably, the copolycarbonate according to the present disclosure has melt index of 7 to 30 g/10 min, measured in accordance with ASTM D1238 (300°C, 1.2 kg condition). More preferably, the melt index (g/10 min) is 8 or more, 8.5 or more, or 9 or more, and 18 or less, 15 or less, or 13 or less.

Preferably, the copolycarbonate according to the present disclosure has chemical resistance of 18 to 50 min, measured in accordance with Mini Jig measurement method. More preferably, the chemical resistance (min) is 19 or more, or 20 or more, and 40 or less, 30 or less, or 28 or less.

### Polycarbonate composition

In addition, the present disclosure provides a polycarbonate composition including the above-mentioned copolycarbonate and a polycarbonate.

The copolycarbonate may be used alone, but it can be used together with the polycarbonate as needed to control the physical properties of the copolycarbonate.

The above polycarbonate is distinguished from the copolycarbonate according to the present disclosure in that a polysiloxane structure is not introduced in a main chain of the polycarbonate.

Preferably, the above polycarbonate includes a repeating unit represented by the following Chemical Formula 5: 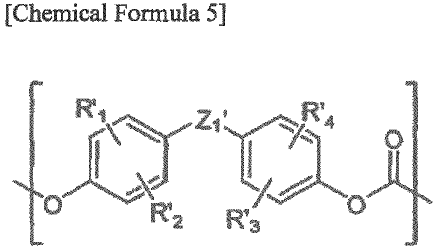 in Chemical Formula 5,
R'₁ to R'₄ are each independently hydrogen, C₁₋₁₀ alkyl, C₁₋₁₀ alkoxy, or halogen, and
Z₁' is C₁₋₁₀ alkylene unsubstituted or substituted with phenyl, C₃₋₁₅ cycloalkylene unsubstituted or substituted with C₁₋₁₀ alkyl, O, S, SO, SO₂, or CO.

In addition, the above polycarbonate has a weight average molecular weight of preferably 1,000 to 100,000 g/mol, more preferably 20,000 to 60,000 g/mol.

The repeating unit represented by Chemical Formula 5 is formed by reacting the aromatic diol compound and the carbonate precursor. The aromatic diol compound and the carbonate precursor that can be used herein are the same as previously described for the repeating unit represented by Chemical Formula 1.

Preferably, R'₁ to R'₄ and Z₁' in Chemical Formula 5 are the same as previously described for R₁ to R₄ and Z₁ in Chemical Formula 1, respectively.

Further, preferably, the repeating unit represented by Chemical Formula 5 is represented by the following Chemical Formula 5-1:

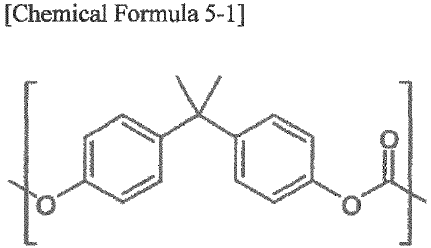

In addition, the polycarbonate composition may further include one or more selected from the group consisting of antioxidants, heat stabilizers, light stabilizers, plasticizers, antistatic agents, nucleating agents, flame retardants, lubricants, impact reinforcing agents, fluorescent brightening agents, ultraviolet absorbers, pigments and dyes.

In addition, the present disclosure provides an article including the above-mentioned polycarbonate composition. Preferably, the article is an injection molded article.

The method for preparing the article may include the steps of mixing the polycarbonate composition according to the present disclosure and the additives, if necessary, using a mixer, extrusion-molding the mixture with an extruder to produce a pellet, drying the pellet and then injecting the dried pellet using an injection molding machine.

As described above, the copolycarbonate according to the present disclosure may introduce a sebacoyl structure in addition to the polysiloxane structure into the main chain of the polycarbonate, thereby improving the flowability while maintaining the excellent physical properties of the polycarbonate.

### DETAILED DESCRIPTION OF THE EMBODIMENTS

The present invention will be described in more detail with reference to the following Examples. However, the following examples are for illustrative purposes only, and the invention is not intended to be limited by the following examples.

### Preparation Example 1: AP-PDMS(n=34)

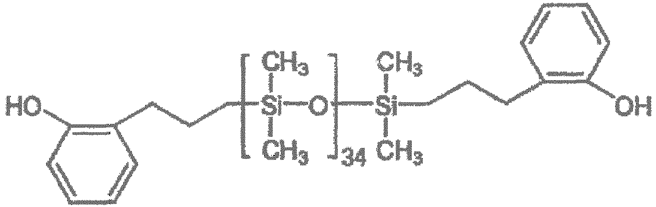

47.60 g (160 mmol) of octamethylcyclotetrasiloxane and 2.40 g (17.8 mmol) of tetramethyldisiloxane were mixed. The mixture was then placed in 3L flask together with 1 part by weight of an acid clay (DC-A3) relative to 100 parts by weight of octamethylcyclotetrasiloxane, and reacted at 60 °C for 4 hours. After completion of the reaction, the reaction product was diluted with ethyl acetate and quickly filtered using a celite. The repeating unit (n) of the unmodified polyorganosiloxane thus prepared was 34 when confirmed through ¹H NMR.

To the resulting terminal-unmodified polyorganosiloxane, 4.81 g (35.9 mmol) of 2-allylphenol and 0.01 g (50 ppm) of Karstedt's platinum catalyst were added and reacted at 90 °C for 3 hours. After completion of the reaction, the unreacted siloxane was removed by conducting evaporation under the conditions of 120 °C and 1 torr. The terminal-modified polyorganosiloxane thus prepared was designated as AP-PDMS (n=34). AP-PDMS was pale yellow oil and the repeating unit (n) was 34 when confirmed through ¹H NMR using Varian 500MHz, and further purification was not required.

### Preparation Example 2: MBHB-PDMS(m=58)

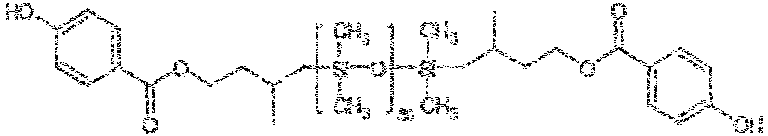

47.60 g (160 mmol) of octamethylcyclotetrasiloxane and 1.5 g (11 mmol) of tetramethyldisiloxane were mixed. The mixture was then introduced in 3L flask together with 1 part by weight of an acid clay (DC-A3) relative to 100 parts by weight of octamethylcyclotetrasiloxane, and reacted at 60 °C for 4 hours. After completion of the reaction, the reaction product was diluted with ethyl acetate and quickly filtered using a celite. The repeating unit (m) of the terminal-unmodified polyorganosiloxane thus prepared was 58 when confirmed through ¹H NMR.

To the resulting terminal-unmodified polyorganosiloxane, 6.13 g (29.7 mmol) of 3-methylbut-3-enyl 4-hydroxybenzoate and 0.01 g (50 ppm) of Karstedt's platinum catalyst were added and reacted at 90 °C for 3 hours. After completion of the reaction, the unreacted siloxane was removed by conducting evaporation under the conditions of 120 °C and 1 torr. The terminal-modified polyorganosiloxane thus prepared was designated as MBHB-PDMS (m=58). MBHB-PDMS was pale yellow oil, the repeating unit (m) was 58 when confirmed through ¹H NMR using Varian 500MHz and further purification was not required.

### Example 1 (copolymerization of 3.5% PDMS(95:5)+0.5% SBC)

To a 2L main reactor equipped with a nitrogen purge device and a condenser and enabling maintenance at room temperature using a circulator, 620 g of H₂O, 116.47 g of bisphenol A (BPA), 5.5 g of AP PDMS prepared in Preparation Example 1, 0.29 g of MBHB PDMS prepared in Preparation Example 2, 0.93g of Sebacoyl chloride, 102.5g of NaOH, and 200ml of MeCl₂ were injected, followed by stirring for a few minutes.

After stopping the nitrogen purge, 62 g of triphosgene and 120 g of MeCl₂ were added to a 1L round-bottom flask to dissolve triphosgene. Then, the dissolved triphosgene solution was slowly injected to the main reactor where the BPA solution was dissolved. After completion of injection, 2.12 g of PTBP was added, followed by stirring for about 10 minutes. After completion of stirring, 97 g of 40 wt% NaOH aqueous solution was added and 1.16 g of TEA as a coupling agent was added thereto. At this time, a reaction pH was maintained at 11∼13. After the reaction solution was allowed to stand for a time for sufficient reaction, pH was decreased to 3∼4 by addition of HCl to terminate the reaction. After stopping the stirring, a polymer layer and an aqueous layer were separated and then the aqueous layer was removed, and the residue was repeatedly washed with pure H₂O again, and this washing process was repeated 3 to 5 times.

After completion of washing, only the polymer layer was extracted, and the polymer crystals were obtained by reprecipitation using a non-solvent such as methanol, H₂O or the like.

In this regard, a weight average molecular weight of the prepared copolycarbonate was 55,000 g/mol.

### Example 2 (copolymerization of 3.5% PDMS(95:5)+1.5% SBC)

A copolycarbonate was prepared in the same manner as in Example 1, except that the sebacoyl chloride was used in an amount of 2.92 g.

### Example 3 (copolymerization of 3.5 PDMS(90:10)+0.5% SBC)

A copolycarbonate was prepared in the same manner as in Example 1, except that the AP PDMS was used in an amount of 5.24g, and the MBHB PDMS was used in an amount of 0.58g.

### Comparative Example 1(mixing of 7% PDMS(95:5)+NPC)

The copolycarbonate, which was prepared in the same manner as in Example 1, except that the AP PDMS was used in an amount of 5.24g, the MBHB PDMS was used in an amount of 0.58g, and the sebacoyl chloride was not used, and the polycarbonate (Neat PC; weight average molecular weight of 55,000 g/mol), which was prepared in the same manner as in Example 1, except that AP PDMS, MBHB PDMS, and sebacoyl chloride were not used, were mixed at a weight ratio of 1:1 and extruded.

### Comparative Example 2(3.5% PDMS(95:5))

A copolycarbonate was prepared in the same manner as in Example 1, except that the sebacoyl chloride was not used.

### Experimental Example

Each property was measured by the following method. The results are given in the following Table 1.
1) weight average molecular weight (Mw): measured by GPC with PS standard using Agilent 1200 series.
2) impact strength at room temperature and low temperature: measured in accordance with ASTM D256(1/8 inch, Notched Izod) at room temperature and -30 °C (low temperature).
3) flowability (Melt Index; MI): measured in accordance with ASTM D1238(300°C, 1.2kg condition).
4) chemical resistance (Jig Test): 13 mm * 64 mm * 1/8 inch specimen was adhered closely to Mini Jig (58.5R), 5 mm * 13 mm cotton was placed in the center, and then 0.5 ml of Nivea Sun spray was put thereon. The time at which the gap occurred in the adhered specimen was measured.

**[Table 1]**

| | Example 1 | Example 2 | Example 3 | Comparative Example 1 | Comparative Example 2 |
|---|---|---|---|---|---|
| Mw (g/mol) | 55,000 | 55,000 | 55,000 | 54,800 | 55,200 |
| impact strength at room temperature (J/mol) | 860 | 850 | 850 | 840 | 850 |
| impact strength at low temperature (J/mol) | 600 | 580 | 630 | 680 | 620 |
| MI | 10.4 | 11.2 | 9.8 | 6.3 | 6.8 |
| (g/10 min) | | | | | |
| chemical resistance (min) | 23 | 20 | 25 | 20 | 18 |

Referring to Table 1, it was confirmed that the copolycarbonates prepared in examples 1 to 3 in which a specific polysiloxane structure and a sebacoyl structure were introduced into the main chain of the polycarbonate, exhibited not only the same level of impact strength at room temperature and low temperature but also excellent flowability and fluidity, compared with the copolycarbonate of Comparative Example 1 in which only a polysiloxane structure was introduced into the main chain of the polycarbonate, and the copolycarbonate of Comparative Example 2 in which the copolycarbonate of Comparative Example 1 was mixed with a general polycarbonate.

## Claims

1. A copolycarbonate, comprising:
a repeating unit represented by Chemical Formula 1,
a repeating unit represented by Chemical Formula 2,
a repeating unit represented by Chemical Formula 3, and
a repeating unit represented by Chemical Formula 4: 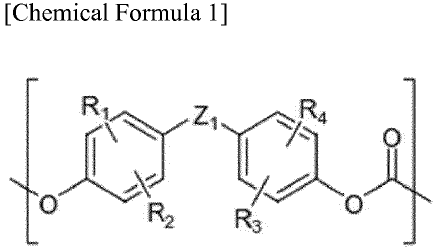 in Chemical Formula 1,
R₁ to R₄ are each independently hydrogen, C₁₋₁₀ alkyl, C₁₋₁₀ alkoxy, or halogen, and
Z₁ is C₁₋₁₀ alkylene unsubstituted or substituted with phenyl, C₃₋₁₅ cycloalkylene unsubstituted or substituted with C₁₋₁₀ alkyl, O, S, SO, SO₂, or CO, 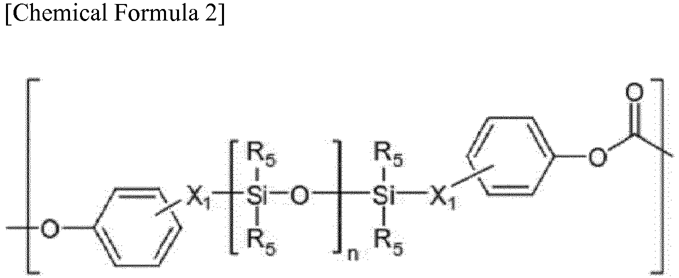
in Chemical Formula 2,
each of X₁ is independently C₁₋₁₀ alkylene,
each of R₅ is independently hydrogen; C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
n is an integer of 10 to 200, 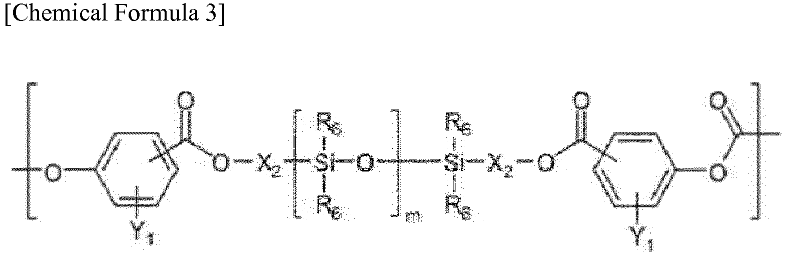
in Chemical Formula 3,
each of X₂ is independently C₁₋₁₀ alkylene,
each of Y₁ is independently hydrogen, C₁₋₆ alkyl, halogen, hydroxy, C₁₋₆ alkoxy or C₆₋₂₀ aryl,
each of R₆ is independently hydrogen; C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
m is an integer of 10 to 200, 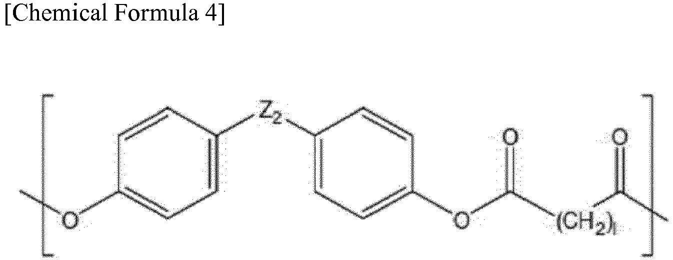
in Chemical Formula 4,
Z₂ is C₁₋₁₀ alkylene unsubstituted or substituted with phenyl, C₃₋₁₅ cycloalkylene unsubstituted or substituted with C₁₋₁₀ alkyl, O, S, SO, SO₂, or CO, and
1 is an integer of 1 to 10.

2. The copolycarbonate according to claim 1,
wherein the repeating unit represented by Chemical Formula 1 is represented by the following Chemical Formula 1-1:

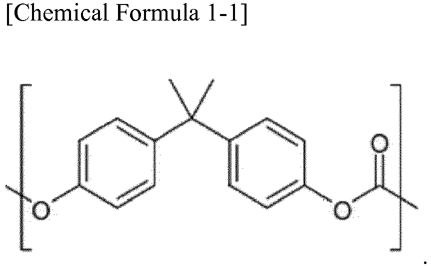

3. The copolycarbonate according to claim 1,
wherein the repeating unit represented by Chemical Formula 2 is represented by the following Chemical Formula 2-2:

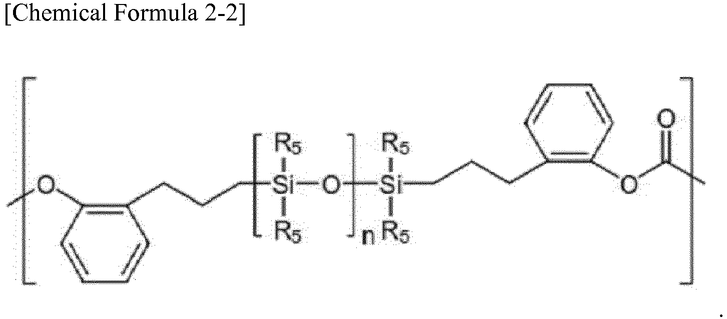

4. The copolycarbonate according to claim 3,
wherein R₅ is methyl.

5. The copolycarbonate according to claim 1,
wherein n is an integer of 10 to 50.

6. The copolycarbonate according to claim 1,
wherein the repeating unit represented by Chemical Formula 3 is represented by the following Chemical Formula 3-2:

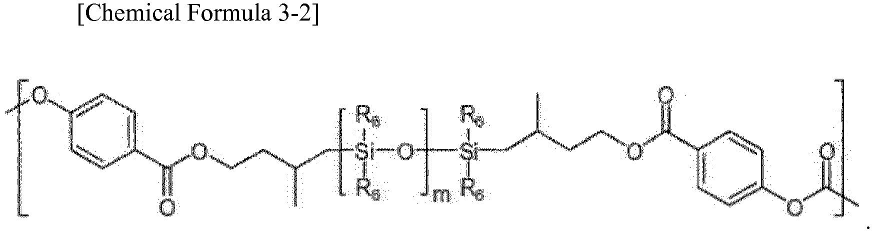

7. The copolycarbonate according to claim 6,
wherein R₆ is methyl.

8. The copolycarbonate according to claim 1,
wherein m is an integer of 30 to 70.

9. The copolycarbonate according to claim 1,
wherein the repeating unit represented by Chemical Formula 4 is represented by the following Chemical Formula 4-2:

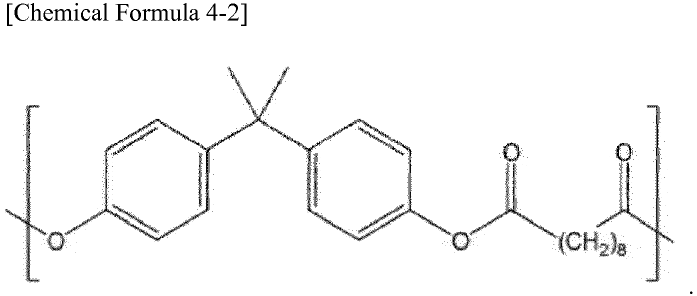

10. The copolycarbonate according to claim 1,
wherein a weight average molecular weight is 1,000 to 100,000 g/mol.

11. A polycarbonate composition comprising the copolycarbonate according to any one of claims 1 to 10, and a polycarbonate.

12. The polycarbonate composition according to claim 11,
wherein a polysiloxane structure is not introduced in a main chain of the polycarbonate.

## Patentansprüche

1. Ein Copolycarbonat, umfassend:
eine Wiederholungseinheit, dargestellt durch chemische Formel 1,
eine Wiederholungseinheit, dargestellt durch chemische Formel 2,
eine Wiederholungseinheit, dargestellt durch chemische Formel 3, und
eine Wiederholungseinheit, dargestellt durch chemische Formel 4: 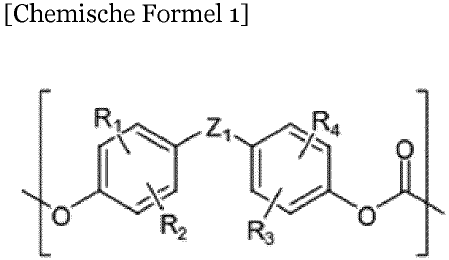 in der chemischen Formel 1,
sind R₁ bis R₄ jeweils unabhängig Wasserstoff, C₁₋₁₀-Alkyl, C₁₋₁₀-Alkoxy oder Halogen, und
ist Z₁ C₁₋₁₀-Alkylen, unsubstituiert oder substituiert mit Phenyl, C₃₋₁₅-Cycloalkylen, unsubstituiert oder substituiert mit C₁₋₁₀-Alkyl, O, S, SO, SO₂ oder CO, 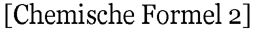 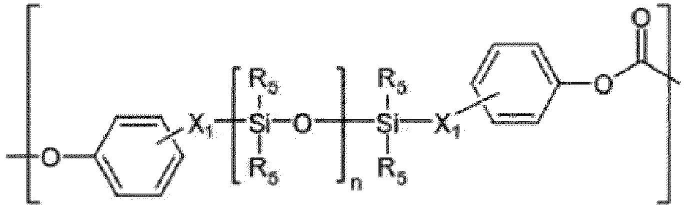
in der chemischen Formel 2,
ist jedes X₁ unabhängig C₁₋₁₀-Alkylen,
ist jedes R₅ unabhängig Wasserstoff; C₁₋₁₅-Alkyl unsubstituiert oder substituiert mit Oxiranyl, Oxiranyl-substituiertem C₁₋₁₀-Alkoxyoder C₆₋₂₀-Aryl; Halogen; C₁₋₁₀-Alkoxy; Allyl; C₁₋₁₀-Haloalkyl; oder C₆₋₂₀-Aryl, und
ist n eine ganze Zahl von 10 bis 200, 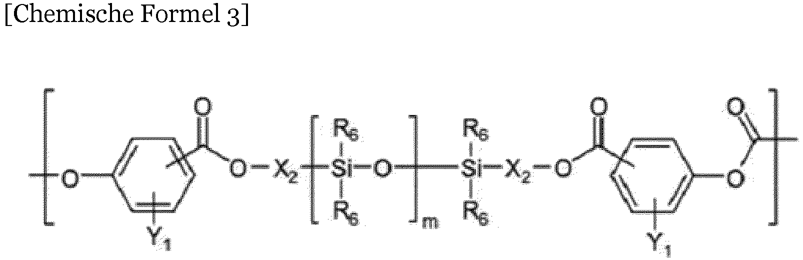
in der chemischen Formel 3
ist jedes X₂ unabhängig C₁₋₁₀-Alkylen,
ist jedes Y₁ unabhängig Wasserstoff, C₁₋₆-Alkyl, Halogen, Hydroxy, C₁₋₆-Alkoxy oder C₆₋₂₀-Aryl,
ist jedes R₆ unabhängig Wasserstoff; C₁₋₁₅-Alkyl unsubstituiert oder substituiert mit Oxiranyl, Oxiranyl-substituiertem C₁₋₁₀-Alkoxyoder C₆₋₂₀-Aryl; Halogen; C₁₋₁₀-Alkoxy; Allyl; C₁₋₁₀-Haloalkyl; oder C₆₋₂₀-Aryl, und
ist m eine ganze Zahl von 10 bis 200, 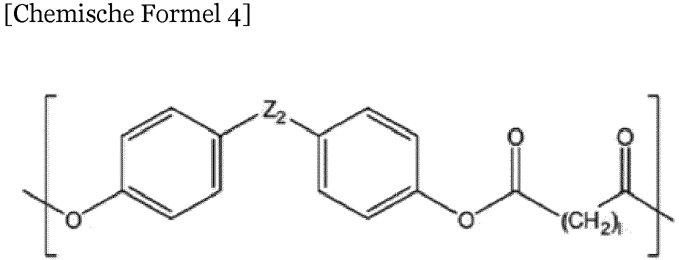
in der chemischen Formel 4
ist Z₂ C₁₋₁₀-Alkylen unsubstituiert oder substituiert mit Phenyl, C₃₋₁₅-Cycloalkylen unsubstituiert oder substituiert mit C₁₋₁₀-Alkyl, O, S, SO, SO oder CO, und
ist 1 eine ganze Zahl von 1 bis 10.

2. Das Copolycarbonat gemäß Anspruch 1,
wobei die Wiederholungseinheit, dargestellt durch chemische Formel 1, dargestellt ist durch die folgende chemische Formel 1-1:

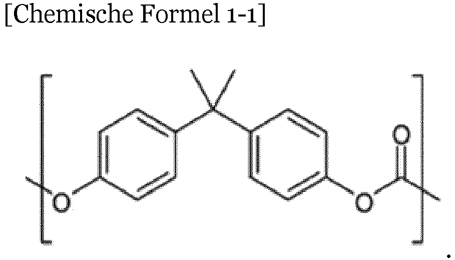

3. Das Copolycarbonat gemäß Anspruch 1,
wobei die Wiederholungseinheit, dargestellt durch die chemische Formel 2, dargestellt ist durch die folgende chemische Formel 2-2:

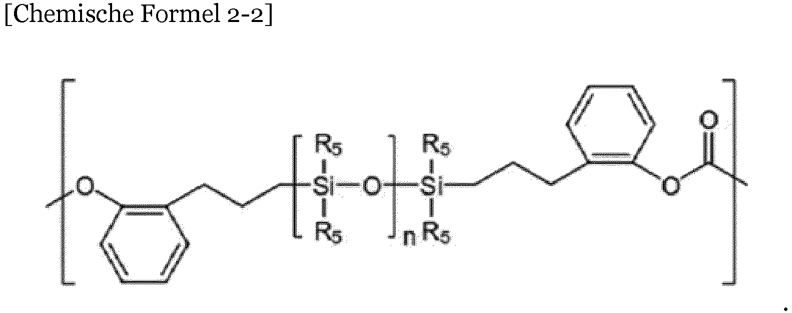

4. Das Copolycarbonat gemäß Anspruch 3,
wobei R₅ Methyl ist.

5. Das Copolycarbonat gemäß Anspruch 1,
wobei n eine ganze Zahl von 10 bis 50 ist.

6. Das Copolycarbonat gemäß Anspruch 1,
wobei die Wiederholungseinheit, dargestellt durch chemische Formel 3, dargestellt ist durch die folgende chemische Formel 3-2:

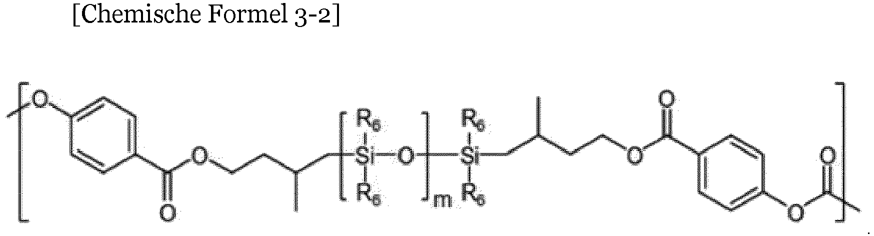

7. Das Copolycarbonat gemäß Anspruch 6,
wobei R₆ Methyl ist.

8. Das Copolycarbonat gemäß Anspruch 1,
wobei m eine ganze Zahl von 30 bis 70 ist.

9. Das Copolycarbonat gemäß Anspruch 1,
wobei die Wiederholungseinheit, dargestellt durch die chemische Formel 4, dargestellt ist durch die folgende chemische Formel 4-2:

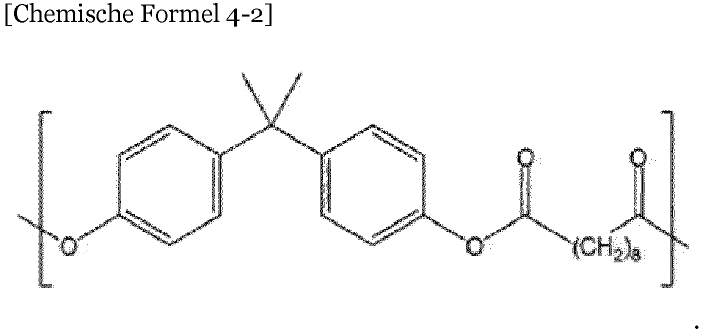

10. Das Copolycarbonat gemäß Anspruch 1,
wobei ein Gewichtsmittel des Molekulargewichts 1.000 bis 100.000 g/mol beträgt.

11. Eine Polycarbonatzusammensetzung, umfassend das Copolycarbonat gemäß einem der Ansprüche 1 bis 10 und ein Polycarbonat.

12. Die Polycarbonatzusammensetzung gemäß Anspruch 11,
wobei eine Polysiloxanstruktur nicht in eine Hauptkette des Polycarbonats eingebracht ist.

## Revendications

1. Copolycarbonate, comprenant :
une unité de répétition représentée par la Formule chimique 1,
une unité de répétition représentée par la Formule chimique 2,
une unité de répétition représentée par la Formule chimique 3, et
une unité de répétition représentée par la Formule chimique 4 : 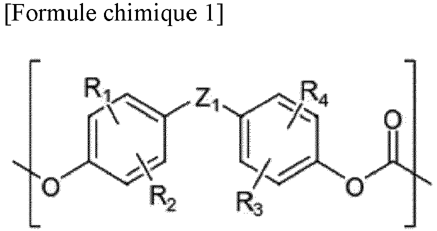 dans la Formule chimique 1,
R₁ à R₄ sont chacun indépendamment un hydrogène, un alkyle en C₁₋₁₀, un alkoxy en Ci-io ou un halogène, et
Z₁ est un alkylène en C₁₋₁₀ non substitué ou substitué par un phényle, un cycloalkylène en C₃₋₁₅ non substitué ou substitué par un alkyle en C₁₋₁₀, O, S, SO, SO₂ ou CO, 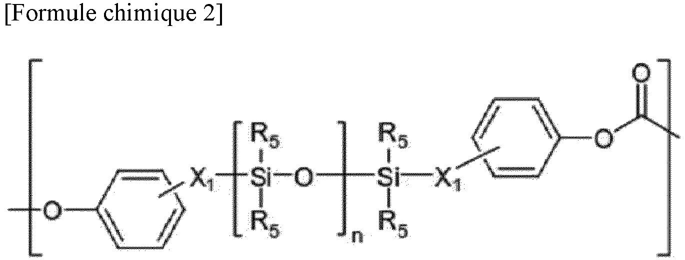 dans la Formule chimique 2,
chaque X₁ est indépendamment un alkylène en C₁₋₁₀,
chaque R₅ est indépendamment un hydrogène ; un alkyle en C₁₋₁₅ non substitué ou substitué par un oxiranyle, un alkoxy en C₁₋₁₀ ou un aryle en C₆₋₂₀ substitué par un oxiranyle ; un halogène ; un alkoxy en C₁₋₁₀ ; un allyle ; un haloalkyle en C₁₋₁₀ ; ou un aryle en C₆₋₂₀, et
n est un nombre entier de 10 à 200, 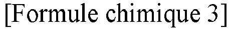 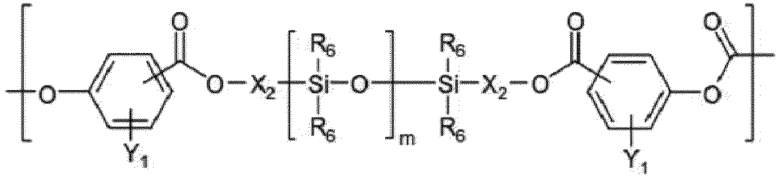
dans la Formule chimique 3,
chaque X₂ est indépendamment un alkylène en C₁₋₁₀,
chaque Y₁ est indépendamment un hydrogène, un alkyle en C₁₋₆, un halogène, un hydroxy, un alkoxy en C₁₋₆ ou un aryle en C₆₋₂₀,
chaque R₆ est indépendamment un hydrogène ; un alkyle en C₁₋₁₅ non substitué ou substitué par un oxiranyle, un alkoxy en C₁₋₁₀ substitué par un oxiranyle ou un aryle en C₆₋₂₀ ; un halogène ; un alkoxy en C₁₋₁₀ ; un allyle ; un haloalkyle en C₁₋₁₀ ; ou un aryle en C₆₋₂₀, et
m est un nombre entier de 10 à 200, 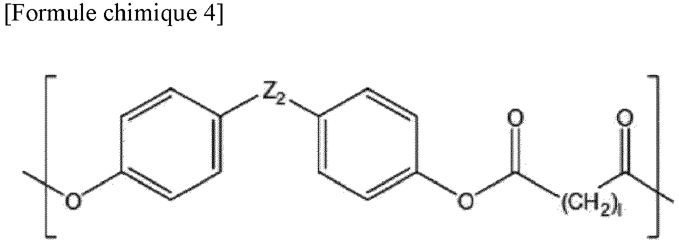
dans la Formule chimique 4,
Z₂ est un alkylène en C₁₋₁₀ non substitué ou substitué par un phényle, un cycloalkylène en C₃₋₁₅ non substitué ou substitué par un alkyle en C₁₋₁₀, O, S, SO, SO₂ ou CO, et
1 est un nombre entier de 1 à 10.

2. Copolycarbonate selon la revendication 1,
dans lequel l'unité de répétition représentée par la Formule chimique 1 est représentée par la Formule chimique 1-1 ci-après :

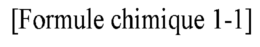

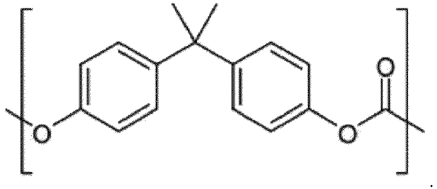

3. Copolycarbonate selon la revendication 1,
dans lequel l'unité de répétition représentée par la Formule chimique 2 est représentée par la Formule chimique 2-2 ci-après :

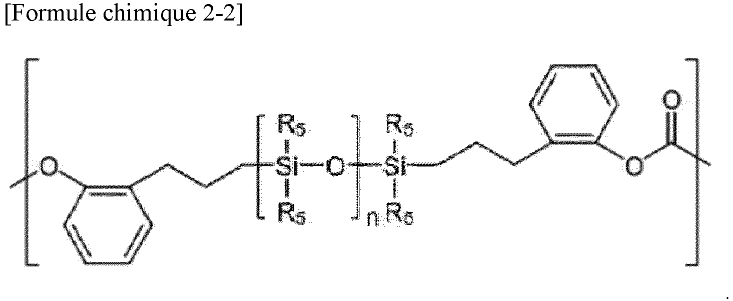

4. Copolycarbonate selon la revendication 3,
dans lequel R₅ est un méthyle.

5. Copolycarbonate selon la revendication 1,
dans lequel n est un nombre entier de 10 à 50.

6. Copolycarbonate selon la revendication 1,
dans lequel l'unité de répétition représentée par la Formule chimique 3 est représentée par la Formule chimique 3-2 ci-après :

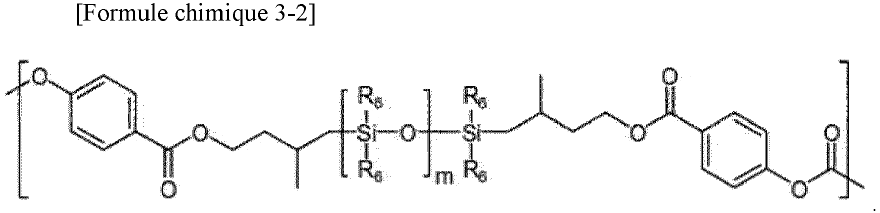

7. Copolycarbonate selon la revendication 6,
dans lequel R₆ est un méthyle.

8. Copolycarbonate selon la revendication 1,
dans lequel m est un nombre entier de 30 à 70.

9. Copolycarbonate selon la revendication 1,
dans lequel l'unité de répétition représentée par la Formule chimique 4 est représentée par la Formule chimique 4-2 ci-après :

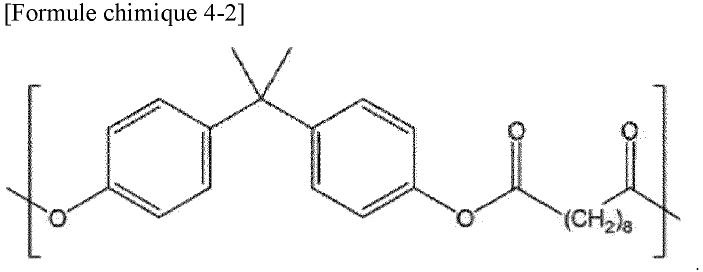

10. Copolycarbonate selon la revendication 1,
dans lequel une masse moléculaire moyenne en poids est comprise entre 1000 et 100 000 g/mol.

11. Composition de polycarbonate comprenant le copolycarbonate selon l'une quelconque des revendications 1 à 10, et un polycarbonate.

12. Composition de polycarbonate selon la revendication 11,
dans lequel une structure polysiloxane n'est pas introduite dans une chaîne principale du polycarbonate.
